**Europäisches Patentamt**

**European Patent Office**

**Office européen des brevets**

(19)

(11) Publication number : **0 443 643 B1**

# EUROPEAN PATENT SPECIFICATION

(12)

(45) Date of publication of patent specification :
**15.11.95 Bulletin 95/46**

(51) Int. Cl.⁶ : **G01S 13/93, B60K 31/00**

(21) Application number : **91200146.8**

(22) Date of filing : **25.01.91**

(54) Method and apparatus for adjusting a vehicle sensor.

(30) Priority : **20.02.90 US 483037**

(43) Date of publication of application :
**28.08.91 Bulletin 91/35**

(45) Publication of the grant of the patent :
**15.11.95 Bulletin 95/46**

(84) Designated Contracting States :
**DE FR GB**

(56) References cited :
**DE-A- 2 050 358**
**DE-A- 2 147 523**
**DE-A- 2 646 540**
**GB-A- 2 139 445**
**US-A- 4 158 841**
**PATENT ABTRACTS OF JAPAN, vol. 7, no. 179**
**(M-234), 9th August 1983; & JP-A-58 081 840**
**(MITSUBISHI DENKI K.K.) 17-05-1983**

(73) Proprietor : **GENERAL MOTORS**
**CORPORATION**
**General Motors Building**
**3044 West Grand Boulevard**
**Detroit Michigan 48202 (US)**

(72) Inventor : **Deering, Richard Karl**
**43124 Mirabile Trail**
**Mt. Clemens, Michigan 48044 (US)**

(74) Representative : **Denton, Michael John et al**
**Patent Section**
**1st Floor**
**Gideon House**
**28 Chapel Street**
**Luton Bedfordshire LU1 2SE (GB)**

## Description

The present invention relates to a method and apparatus for adjusting a sensor for use in sensing objects in the path of a vehicle with reference to the direction of motion of the vehicle.

Various automotive vehicle control systems such as forward obstacle detection systems or speed control systems for maintaining a predetermined distance relative to another vehicle, utilize sensors to detect objects in the path of the vehicle to which they are fitted. In general, these sensors transmit a beam of defined width forward of the vehicle and sense a reflection of the beam from a forward object, which may be for example another vehicle. Typical sensors used in these systems include microwave radar sensors and infrared sensors.

A problem associated with such systems in which the sensor is fixed in a manner to sense directly ahead of the vehicle, it will effectively monitor the path of the vehicle only when the vehicle's trajectory is a straight line. When the vehicle's motion becomes curved, there is an effective shift of the path of the vehicle relative to the beam of the sensor. This effective shift increases with distance from the sensor. This shift may result in the sensor not detecting an object in the vehicle's path. Further, the sensor may detect objects, such as other vehicles or barriers adjacent the road, which are not in the vehicle's path.

It has been proposed to maximize the useful range of the sensor and to avoid the detection of unwanted objects by moving the sensor, for example by rotating the antenna of a radar sensor, as the vehicle travels through a non-linear path, so as to move the beam of the sensor in the direction of the vehicle's path. However, when the beam is moved so as to maximize the useful range of the sensor, there is the possibility that another vehicle or object within the vehicle's path becomes undetectable due to an effective lateral shift of the object or other vehicle out of the beam for some arc length of the non-linear path as the range to the object or other vehicle decreases from the maximum range of the sensor along this path, or not to be detected, such as when another vehicle enters into this arc length from another trajectory.

US-A-4,158,841 discloses a method of controlling the safety distance of a vehicle which includes the determination whether a detected object lies within a maximum inference-free measuring distance from the vehicle, the changing of the pivot angle of an antenna of the vehicle and possibly also the opening angle of the transmitted beam independence on the steering wheel deflection and/or traverse acceleration of the vehicle, suppressing large extended objects by a separate measurement of the distance of the vehicle to the object and relative velocity of the vehicle with respect to the object by comparison of the measured change in distance with a calculated change in distance or the measured relative velocity with a calculated relative velocity, preferring an object recognised as a preceding vehicle among all objects, and combining in accordance with the maximum inference-free measuring distance values of at least one of the measured distance of the vehicle to the object, the measured relative velocity of the vehicle with respect to the object and the measured velocity of the vehicle to provide the control parameters.

The present invention seeks to provide an improved method and apparatus for adjusting such sensors.

Accordingly, an aspect of the present invention provides a method of adjusting a sensor for use in detecting objects in the path of a vehicle as defined in claim 1.

According to another aspect of the present invention, there is provided apparatus for adjusting a sensor for use in detecting objects in the path of a vehicle as defined in claim 12.

The invention can increase the effective field of detection of the sensor as compared to the fixed beam case and can prevent the loss of detection of an obstructing object resulting from the effective lateral shift of the field of detection relative to the vehicle's path as the field of detection is steered into the curved path of the vehicle.

The invention can also provide for the simultaneous steering of transmitted and received beams of a forward looking sensor of a vehicle as the vehicle travels through a curvilinear path.

Preferably, the field of detection of the sensor is steered at an angle which limits the effective lateral shift of the field of detection relative to the projected path of the vehicle such that a predetermined minimum detection criterium is achieved. In one embodiment, the minimum detection criterium is represented by a predetermined portion of the field of detection intersecting an obstruction located at the point of maximum lateral shift of the field of detection relative to the vehicle's projected path. In another embodiment, the minimum detection criterium is defined by a predetermined maximum lateral shift of the field of detection relative to the projected path.

Advantageously, the predetermined maximum lateral shift is related to the width of a small sized vehicle such that the centreline of the field of detection is not shifted beyond the edge of an obstructing vehicle.

Preferably, the angle by which the field of detection is moved is controlled on the basis of the determined radius of curvature of the vehicle's projected path.

An embodiment of the present invention is described below, by way of illustration only, with reference to the accompanying drawings, in which:

Figure 1 illustrates a prior art detection system in which the sensor is fixed;

Figure 2 illustrates a prior art detection system in which the sensor is steered to maximize the detection range of the sensor;

Figures 3 and 4 illustrate an embodiment of detection system;

Figure 5 is a block diagram of an embodiment of sensor system; and

Figure 6 is a flow diagram illustrating the operation of the system of Figure 5 in moving the radar beam.

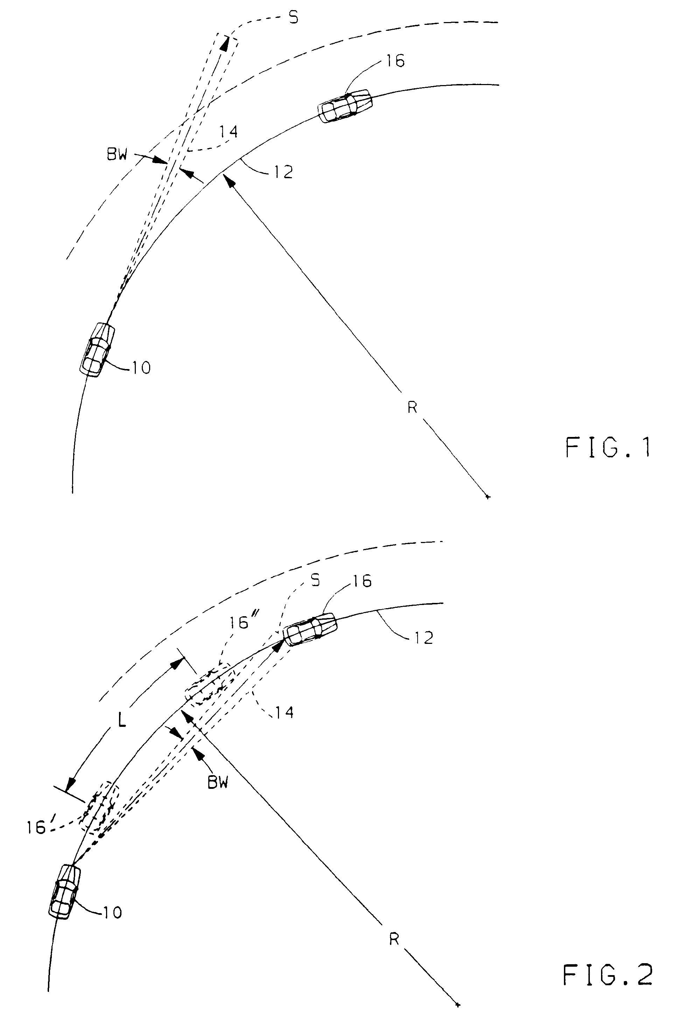

Referring to Figure 1, the situation resulting from a detection system having a fixed sensor (such as a radar sensor) transmitting a fixed beam, can be seen for the case where the vehicle to which it is attached travels through a curved path. The detection system is carried on a vehicle 10 and transmits a beam 14 having a beam width BW and a maximum detection range S. The path of the vehicle 10 is represented by the line 12, passing through the centreline of the vehicle, which has a radius R. As can be seen, due to the curvature of the path away from the beam 14, there is an effective lateral shift between the beam 14 of the sensor and the path of the vehicle. This shift increases with distance from the vehicle 10. In the case where an obstructing vehicle 16 is in the path of the vehicle 10, the effective lateral shift between the sensor beam 14 and the obstructing vehicle 16 results in the obstructing vehicle 16 falling out of the detection zone of the beam 14 even at relatively small distances from the vehicle 10. Further, the sensor may pick up objects such as vehicles following different paths or barriers adjacent the road which are not within the vehicle's path.

Figure 2, on the other hand, illustrates the situation resulting from a detection system in which the sensor beam 14 is steered along the path of the vehicle 10 so as to increase the detection range of the sensor. This is accomplished by steering the beam 14 so as to intersect the path of the vehicle 10 at the maximum range of the sensor. As can be seen, there is an effective lateral shift between the beam 14 and the path that would result in obstructing vehicles (such as the vehicles 16′ and 16″) falling out of the detection zone of the beam 14 over the arc length L of the path 12. Similarly, objects coming onto the path 12 in this region from another trajectory would also not be detected.

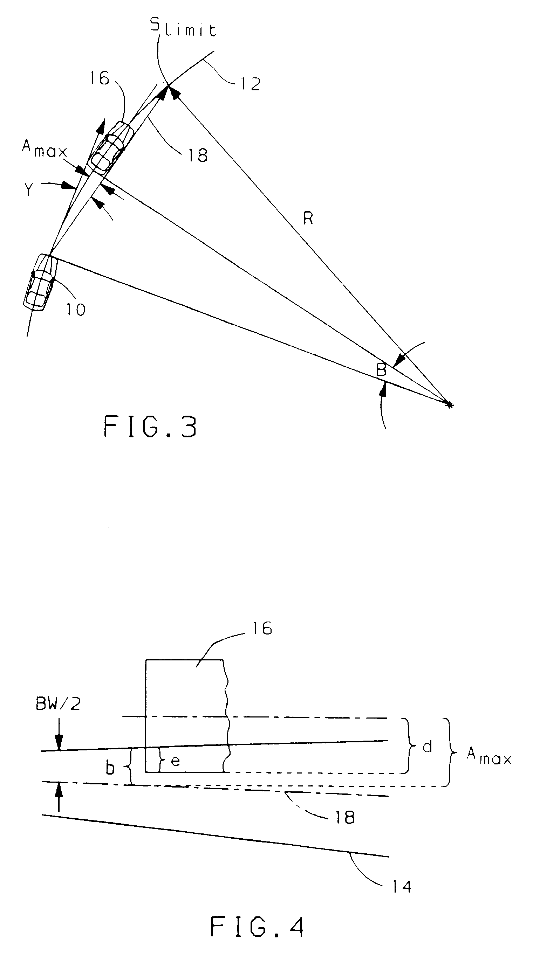

Figures 3 and 4 illustrate an embodiment of the invention, applied to a sensor 22 which transmits and receives a beam 14, having a predetermined field of detection, and in which the beam 14 of the sensor is shown steered on the basis of the curved, substantially circular, path of the vehicle, at a sensor steering angle Y.

The parameters illustrated in Figures 3 and 4 are as follows : (1) Y is the steering angle of the beam 14 and is defined as the angle between the centreline 18 of the beam 14 and the velocity vector of the vehicle

10; (2) $S_{limit}$ is substantially the limit of the detection range of the sensor and in use is the distance from the vehicle 10 to the point at which the beam centreline 18 intersects the substantially circular line 12 of the path of the vehicle 10; (3) $A_{max}$ is the maximum lateral distance, or shift between the path line 12 and the beam centreline 18 for a given steer angle Y and path curvature and occurs at a distance $S_{limit}/2$ for the path 12 shown; (4) B is half the angle of the arc segment defined by the beam centreline 18; (5) R is the radius of the path 12 of the vehicle 10; (6) b is half the width of the beam 14 at the distance $S_{limit}/2$; (7) d is half the width of the obstructing vehicle 16; (8) e is the width of the beam 14 irradiating the obstructing vehicle 16 (the beam/vehicle overlap); and (9) BW is the angular beam width.

The path ahead of the vehicle 10 along the line 12 is a projected path determined in the preferred embodiment from the angle to which the vehicle 10 is steered and the velocity of the vehicle 10. In another embodiment, the projected path is determined from the steering angle alone.

In general, the beam 14 is steered to an angle of Y so that the value $A_{max}$ falls within a predetermined minimum detection criterium. In one embodiment, $A_{max}$ is made equal to half the width of the vehicle 10.

In another embodiment, the value of $A_{max}$ is computed such that in use a desired minimum proportion of the beam width BW irradiates the obstructing vehicle 16 over the range $S_{limit}$. In other words, the value of $A_{max}$ is chosen such that a predetermined minimum proportion of the field of detection of the sensor falls onto a predetermined area about the path of the vehicle 10. This could be in, to one side, or above the path of the vehicle 10, or some other area near or in the path of the vehicle 10.

The following relationships between the foregoing parameters can be shown:

$$Y = B, \quad (1)$$

$$S_{limit} = 2R\sin Y + \Delta S \quad (2)$$

where $\Delta S$ generally accounts for the path width,

$$Y_{limit} = \cos^{-1}[(R - A_{max})/R] \quad (3)$$

where $Y_{limit}$ is the value of the beam angle Y resulting in the maximum lateral distance value $A_{max}$,

$$e = d - A_{max} + b, \quad (4)$$

$$b = R\sin\{\cos^{-1}[(R - A_{max})/R]\}\tan(BW/2). \quad (5)$$

In the case where the beam 14 is to be steered so that a minimum proportion PCT of the beam will irradiate the obstructing vehicle 16 when the obstructing vehicle is at the distance $S_{limit}/2$, then

$$PCT = e/2b = (b + d - A_{max})/2b \quad (6)$$

where $+b \geq (A_{max}-d) \geq -b$ and b is defined by expression (5).

From expressions (5) and (6), it can be seen that since the values of PCT, d and BW are known or are assigned desired values, only $A_{max}$ and R are unknowns. However, the radius R of the projected path of the vehicle 10 can be determined from the driver's chosen steering angle $D_d$ (the steering wheel position angle relative to a reference angle, such as a centreline position, divided by the steering gear ratio) of the vehicle 10; and more accurately by also taking into account vehicle dynamics by use of the general linear vehicle dynamics equation

$$D_d = 57.3(A + B)/R + KtV^2/R, \quad (7)$$

where A and B are the distances from the front and rear wheels of the vehicle 10 to its centre of gravity, Kt is a vehicle specific constant and V is the velocity of the vehicle 10. The vehicle specific constant Kt is a scaling factor related to the lateral acceleration term $V^2/R$ and the steering angle, and is also a function of the vehicle suspension characteristics. An approximation of the constant Kt can be determined by experiment, for example by driving the vehicle through a curve of known radius at a known velocity and by measuring the steering angle.

Since $D_d$ and V can be measured, the expression (7) can then be solved to find the radius of curvature R of the projected path of the vehicle 10 taking into account the motion of the vehicle. Using the obtained value of R, expression (6) can then be solved for $A_{max}$ as a function of the obtained curvature R of the projected path. The determined value of $A_{max}$ provides the desired minimum proportion PCT of the beam 14 which will intersect the obstructing vehicle 16 (the minimum detection criterium). Once the value of $A_{max}$ is determined, the steer angle $Y_{limit}$ which will provide the minimum proportion can then be determined from expression (3).

It can be seen that for known or assigned values of beam width BW, obstructing vehicle width d and minimum irradiating proportion PCT, a corresponding value of $Y_{limit}$ can be determined from a measurement of the radius R of the projected path of the vehicle 10 which, in this embodiment is obtained via expression (7) from measurements of vehicle speed V and driver input steering angle $D_d$.

In another embodiment, the minimum detection criterium is chosen to be a constant value for $A_{max}$, such as half the width of the narrowest obstructing vehicle that may be encountered, for example the width of a small sized vehicle. This value is then substituted in expression (3) along with the determined radius R to obtain the steer angle $Y_{limit}$.

By controlling the steer angle of the beam 14 to the angle $Y_{limit}$, the effective lateral shift of the beam 14 relative to the projected path is limited so that no obstructing vehicle will fall out of the beam 14 as the beam is steered while travelling along a curved path. At the same time, the detection range $S_{limit}$ of the sensor is maximized. The value of this range can be computed by expression (2) and used to cut-off signals from the sensor beyond this range so as to prevent sensing of unwanted vehicles in different paths, or other objects such as railings, etc.

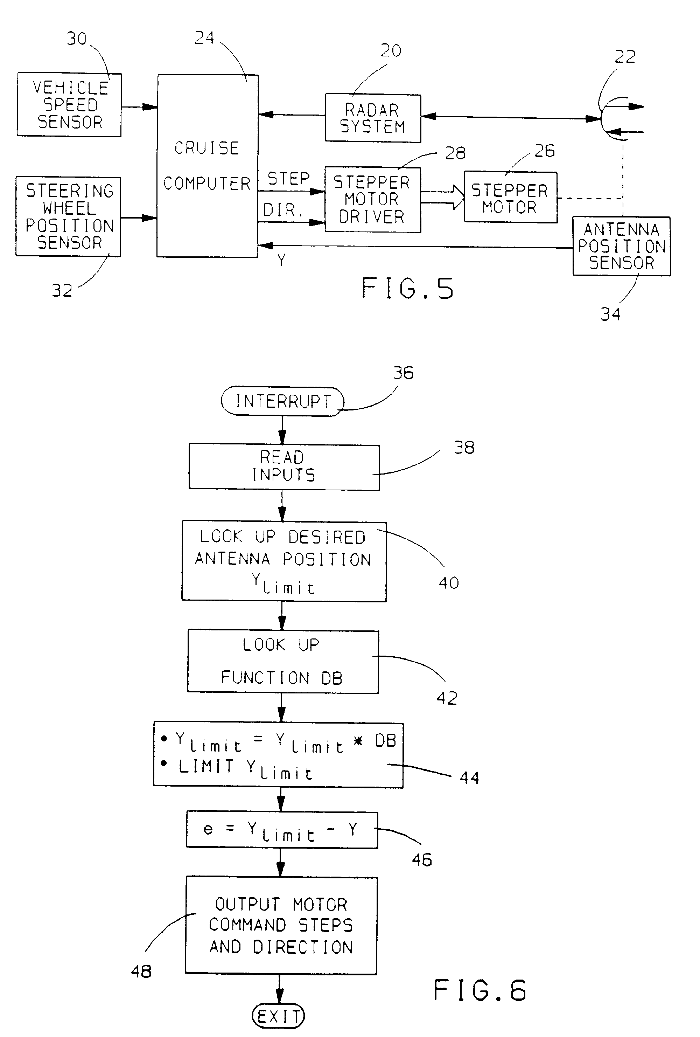

Referring to Figure 5, there is illustrated a system fitted to the vehicle 10 and used for sensing the presence of, for example, an obstructing vehicle and for steering the beam 14 on the basis of the equations described above. The system includes a radar system 20 of conventional design for determining distance and/or speed relative to an object such as the obstructing vehicle 16. The radar system 20 transmits a microwave signal of known beam width BW ahead of the vehicle 10 by means of an antenna 22 mounted on the front of the vehicle 10. This signal forms the beam 14 previously referred to.

A reflected microwave signal from an object in the vehicle's projected path is picked up by the antenna 22 and detected by the radar system 20 which in turn provides distance and/or relative speed information to a cruise computer 24.

The cruise computer 24 may provide vehicle control functions in response to the information provided from the radar system 20. For example, the cruise computer 24 may control the speed of the vehicle 10 to maintain a desired distance from the obstructing vehicle 16 in a similar manner to that described in our copending application No (RJ/3436) filed the same day as this application.

The antenna 22 is rotatable to steer the radar beam transmitted and received thereby by means of a stepper motor 26. The antenna may, for example, be mounted on a platform mounted on an input shaft that is rotatable about a vertical axis on rotation of an output shaft of the motor 26 to which it is coupled. The stepper motor 26 is controlled by the cruise computer 24 via a stepper motor driver 28 to rotate antenna 22 to steer the radar beam 14. In this embodiment, the stepper motor driver 28 causes the stepper motor 26 to rotate by a predetermined incremental angle for each step command from the computer 24, in the direction commanded by the computer 24.

The cruise computer 24 determines a desired radar beam limit steer angle $Y_{limit}$ in the manner described above, in response to vehicle speed V, provided by a vehicle speed sensor 30, and a driver input steering angle $D_d$, provided by a steering wheel position sensor 32. Based on the angular position of the antenna (the beam angle Y), provided by an antenna position sensor 34, the cruise computer 24 determines direction and the number of angle increments by which the stepper motor 26 is to be rotated in order to establish the desired steer angle $Y_{limit}$. Control signals representative of this information are sent to the stepper motor driver 28 which causes the stepper motor 26 to be moved by the required number of angle increments in the determined direction.

The cruise computer 24 is in this embodiment a conventional general purpose digital computer, for example a Motorola MC-68HC11 microcomputer chip, programmed to control the angle of the antenna 22 and therefore the radar beam angle Y on the basis of the equations described above. The computer 24 comprises a read-only memory, a random access memory, an analog to digital converter, a central processing unit and an input-output section for interfacing with the peripheral devices. The read-only memory of the computer 24 contains the instructions necessary to implement its control algorithms in addition to storing constants, look-up tables, etc. utilized in carrying out its various tasks.

The flow diagram of Figure 6 illustrates the control algorithm of the cruise computer 24 used in this embodiment in controlling the steering of the radar beam 14. The specific program instructions are not described in detail as they will be apparent to those skilled in the art from the flow diagram in Figure 6. Of course, electronic circuitry may be used in place of a microprocessor.

Referring to Figure 6, the program for causing the cruise computer 24 to control the steer angle Y of the radar beam 14 by control of the angular position of the antenna 22 is executed at repeated interrupt intervals established by an internal timer. Upon the occurrence of a timer interrupt, the routine in entered at step 36 and proceeds to read the various input values including the vehicle speed V, the steering wheel position $D_d$ and the antenna angular position Y. This step may also filter the input values if required.

At the step 40, the desired antenna position $Y_{limit}$ is determined so as to establish the desired minimum detection criterium. In this embodiment, $Y_{limit}$ is chosen so as to obtain a maximum lateral shift value $A_{max}$ which establishes a predetermined minimum proportion PCT, in this case percent (such as 30%), of the beam width falling on, for example, an obstructing vehicle. In this embodiment, the antenna position $Y_{limit}$ is obtained from a look-up table storing values of antenna steer angle $Y_{limit}$ as a function of vehicle speed V and steering wheel position $D_d$. These values are obtained by means of the expressions described above, summarized as follows. For each combination of vehicle speed V and steering wheel position $D_d$, there is a corresponding projected path curvature radius R obtained from the expression (7). For each obtained radius R, there is a corresponding value of $A_{max}$ for the known beam width BW of the radar beam, assumed obstructing vehicle width d and desired minimum proportion PCT of the radar beam to irradiate the obstructing vehicle, obtained from expression (5). Finally, for each value of $A_{max}$ and radius R, there is a corresponding steering angle $Y_{limit}$ determined from the expression (3). Using these relationships, a look-up table of values of antenna steering angle $Y_{limit}$ is stored in the read-only memory of the cruise computer 24, as a function of vehicle speed V and steering wheel position $D_d$. As mentioned above, the predetermined minimum proportion of the beam width BW is determined as a predetermined minimum proportion of the beam to irradiate a predetermined area about the path of the vehicle. This may be in, above or to the side of the path, or any other area related to the path of the vehicle in which it is desired to detect an obstructing vehicle or other object.

It is not desirable to steer the antenna to the steer angle $Y_{limit}$ for normal straight path steering corrections made by the driver. These normal steering corrections are represented by steering wheel angles $D_d$ less than a predetermined value. To prevent the antenna being rotated at steering wheel angles less than the predetermined value, a dead-band function is stored in a look-up table in the the read-only memory as a function of the steering wheel angle relative to the reference angle.

In this embodiment, the dead-band function has a value of zero for values of steering angle $D_d$ less than the predetermined value, and increases to unity as the steering angle increases above the predetermined value.

The dead-band function DB is obtained from the look-up table at step 42. At step 44, the steering angle $Y_{limit}$ determined at step 40 is multiplied by the dead-band function determined at step 42 so as to prevent the antenna 22 from being rotated if the steering angle $D_d$ represents a straight path steering correction. The resulting value is thus limited to a maximum allowable antenna steer angle $Y_{limit}$.

At the next step 46 the error e in the position of the antenna steering angle is determined on the basis of the expression e = $Y_{limit}$ - Y. At step 48 the required stepper motor direction (based on the sign of the error e) and the number of angle increments for correcting the antenna steering angle error determined at step 46 is determined and output to the stepper motor driver 28. The number of angle increments is determined according to the expression

number of increments  =  G * e,

where G is a gain function dependent on the error, G = f(e), with a value from 0 to 1. In another embodiment, G is a constant.

An error dead-band may be provided wherein no corrections in the steer angle of the antenna is provided for errors within the dead-band.

In the preferred embodiment, the step 48 outputs the angle increments to the stepper motor driver 28 sequentially at a predetermined rate to limit the slewing rate of the antenna. For example, step 48 may output the increment commands to the stepper motor driver 28 at 30 millisecond intervals by repeatedly executing a 30 millisecond delay loop until the required number of increments have been made. This method of rotating the stepper motor 26 limits the slewing rate of the antenna 22 to a predetermined vehicle steering wheel rotation rate and functions to filter rapid steering wheel movements. Following the step 48, the program exits the routine.

By the foregoing routine, the antenna steering angle and its radiated radar beam is controlled as the vehicle 10 travels through a curved path to rotate the radar beam angle such that the desired minimum detection criterium is established.

As will be apparent to the person skilled in the art, the sensor 22 may be replaced by other types of sensor.

## Claims

1. A method of adjusting a sensor (22) for use in sensing objects in the path of a vehicle (10) so as to direct the beam (14) of the sensor with reference to the direction of motion of the vehicle, which direction of motion is controlled by an operator steering input; the method comprising the steps of measuring the amount of operator steering input to obtain the projected path line of the vehicle; determining an angle by which the beam is to be steered as a function of the measured steering input; and adjusting the sensor so as to cause the beam thereof to be steered by the determined angle; characterised by the steps of determining a limit angle ($Y_{limit}$) at which the distance between a centreline of the beam of the sensor and the obtained projected path line of the vehicle is a maximum lateral distance ($A_{max}$) and limiting the determined angle by which the beam of the sensor is to be steered at the limit angle ($Y_{limit}$).

2. A method according to claim 1, wherein the maximum lateral distance ($A_{max}$) has a value so that a predetermined minimum proportion (PCT) of the width of the beam is directed onto the path of the vehicle.

3. A method according to claim 1 or 2, comprising the step of measuring the velocity of the vehicle, and determining the angle by which the beam is to be steered as a function of the vehicle velocity.

4. A method according to any preceding claim, comprising, when the projected path line of the vehicle is substantially circular, the steps of determining the radius of curvature (R) of the projected path line of the vehicle, and determining the angle by which the beam is to be steered as a function of the determined radius of curvature (R).

5. A method according to claim 4, comprising the steps of determining the limit angle ($Y_{limit}$) by which the beam is to be moved on the basis of the expression $Y_{limit} = \cos^{-1}((R-A_{max})/R)$ where R is the radius of curvature of the projected path line of the vehicle, $A_{max}$ is the maximum lateral distance between the projected path line and the centreline of the beam and $Y_{limit}$ is the value of the steering angle of the beam resulting in the maximum lateral distance $A_{max}$.

6. A method according to claim 5, wherein the value of $A_{max}$ is a function of the radius of curvature (R) of the projected path line of the vehicle, the width (BW) of the beam, the width (d) of a small vehicle and the predetermined minimum proportion of the width of the beam.

7. A method according to claim 5, wherein the value of $A_{max}$ is substantially half of the width of a small sized vehicle.

8. A method according to any one of claims 4 to 7, comprising the steps of determining the detection range ($S_{limit}$) of the beam of the sensor on the basis of the equation $S_{limit} = 2R\sin Y + \text{Delta } S$, where R is the radius of curvature of the projected path line of the vehicle, Y is the steering angle of the beam and Delta S is the path width.

9. A method according to any preceding claim, comprising the steps of measuring the actual angle by which the beam is steered (Y), determining the error (e) between the actual moved angle and the determined angle ($Y_{limit}$) on the basis of the expression $e = Y_{limit} - Y$, and altering the amount by which the sensor is adjusted by a proportion (G) of the error.

10. A method according to any preceding claim, comprising the steps of inhibiting the adjustment of the sensor when the angle by which the beam is to be moved is less than a predetermined angle.

11. A method according to any preceding claim, wherein the step of adjusting the sensor is carried out at no more than a predetermined maximum rate.

12. Apparatus for adjusting a sensor (22) for use in sensing objects in the path of a vehicle (10) so as to direct the beam (14) of the sensor with reference to the direction of motion of the vehicle, which direction of motion is controlled by an operator steering input; the apparatus comprising sensing means (32) for measuring the amount of operator steering input to obtain the projected path line of the vehicle; processing means (24) for determining an angle by which the beam of the sensor (22) is to be steered as a function of the measured steering input; and adjusting means (26,28) for adjusting the sensor so as to cause the beam thereof to be steered by the determined angle; characterised in that the processing means is operative to determine a limit angle ($Y_{limit}$) at which the distance between a centreline of the beam of the sensor and the obtained projected path line of the vehicle is a maximum lateral distance ($A_{max}$) and to limit the determined angle by which the beam of the sensor is to be steered at the limit angle ($Y_{limit}$).

13. Apparatus according to claim 12, wherein the maximum lateral distance ($A_{max}$) has a value so that a predetermined minimum proportion (PCT) of the width of the beam is directed onto the path of the vehicle.

14. Apparatus according to claim 12 or 13, comprising a velocity sensor (30) for measuring the velocity of the vehicle, the processing means (24) being adapted to determine the angle by which the beam is to be steered as a function of the vehicle velocity.

15. Apparatus according to any one of claims 12 to 14, wherein the processing means (24) is adapted to determine the radius of curvature (R) of the projected path line of the vehicle and to determine the angle by which the beam is to be steered as a function of the determined radius of curvature (R) when the direction of motion of the vehicle is substantially circular.

16. Apparatus according to claim 15, wherein the processing means (24) is adapted to determine the limit angle ($Y_{limit}$) by which the beam is to be moved on the basis of the expression $Y_{limit} = \cos^{-1}((R-A_{max})/R)$ where R is the radius of curvature of the projected path line of the vehicle, $A_{max}$ is the maximum lateral distance between the projected path line and the centreline of the beam and $Y_{limit}$ is the value of the steering angle of the beam resulting in the maximum lateral distance $A_{max}$.

17. Apparatus according to claim 16, wherein the value of $A_{max}$ is a function of the radius of curvature (R) of the projected path line of the vehicle, the width (BW) of the beam, the width (d) of a small vehicle and the predetermined minimum proportion of the width of the beam.

18. Apparatus according to claim 16, wherein the value of $A_{max}$ is substantially half of the width of a small sized vehicle.

19. Apparatus according to any one of claims 15 to 18, wherein the processing means (24) is adapted to determine the detection range ($S_{limit}$) of the beam of the sensor on the basis of the equation $S_{limit} = 2R\sin Y + Delta\ S$, where R is the radius of curvature of the projected path line of the vehicle, Y is the steering angle of the beam and Delta S is the path width.

20. Apparatus according to any one of claims 12 to 19, comprising sensing means for measuring the actual angle by which the beam is steered (Y), the processing means (24) being adapted to determine the error (e) between the actual moved angle and the determined angle ($Y_{limit}$) on the basis of the expression $e = Y_{limit} - Y$, and to cause the adjusting means to alter the amount by which the sensor is adjusted by a proportion (G) of the error.

21. Apparatus according to any one of claims 12 to 20, wherein the processing means (24) is adapted to inhibit the adjustment of the sensor when the angle by which the beam is to be moved is less than a predetermined angle.

22. Apparatus according to any one of claims 12 to 21, wherein the processing means is adapted to cause the sensor to be adjusted at no more than a predetermined maximum rate.

**Patentansprüche**

1. Ein Verfahren zur Einstellung eines Sensors (22) zum Gebrauch bei der Wahrnehmung von Objekten im Weg eines Fahrzeuges (10), um das Sensorbündel (14) bezüglich der Bewegungsrichtung des Fahrzeuges zu lenken, wobei die Bewegungsrichtung durch eine Lenkungseingabe des Bedieners gesteuert wird und das Verfahren die Schritte umfaßt, daß die Größe der Lenkungseingabe des Bedieners gemessen wird, um die projizierte Weglinie des Fahrzeuges zu erhalten; daß ein Winkel bestimmt wird, um welchen das Bündel als Funktion der gemessenen Lenkeingabe zu lenken ist; und daß der Sensor eingestellt wird, um zu veranlassen, das dessen Bündel um den vorbestimmten Winkel gelenkt wird; gekennzeichnet durch die Schritte, daß ein Grenzwinkel ($Y_{Grenze}$) bestimmt wird, bei welchem der Abstand zwischen einer Mittellinie des Sensorbündels und der erhaltenen projizierten Weglinie des Fahrzeuges ein maximaler lateraler Abstand ($A_{max}$) ist, und daß der bestimmte Winkel, um welchen das Sensorbündel zu lenken ist, auf den Grenzwinkel ($Y_{Grenze}$) begrenzt wird.

2. Ein Verfahren nach Anspruch 1, worin der maximale laterale Abstand ($A_{max}$) einen Wert aufweist, so daß ein vorbestimmter minimaler Anteil (PCT) der Bündelbreite auf den Weg des Fahrzeuges gelenkt wird.

3. Ein Verfahren nach Anspruch 1 oder 2, welches den Schritt umfaßt, daß die Geschwindigkeit des Fahrzeuges gemessen und der Winkel, um welchen das Bündel zu lenken ist, als Funktion der Fahrzeuggeschwindigkeit bestimmt wird.

4. Ein Verfahren nach einem vorhergehenden Anspruch, welches, wenn die projizierte Weglinie des Fahrzeuges im wesentlichen kreisförmig ist, die Schritte umfaßt, daß der Krümmungsradius (R) der projizierten Weglinie des Fahrzeuges bestimmt wird und daß der Winkel bestimmt wird, um welchen das Bündel als Funktion des bestimmten Krümmungsradius (R) zu lenken ist.

5. Ein Verfahren nach Anspruch 4, welches die Schritte umfaßt, daß der Grenzwinkel ($Y_{Grenze}$), um welchen das Bündel zu bewegen ist, auf Basis des Ausdrucks $Y_{Grenze} = \cos^{-1}((R - A_{max})/R)$ bestimmt wird, wobei R der Krümmungsradius der projizierten Weglinie des Fahrzeuges ist, $A_{max}$ der maximale laterale Abstand zwischen der projizierten Weglinie und der Mittellinie des Bündels ist und $Y_{Grenze}$ der Wert des Lenkungswinkels des Bündels ist, welcher zum maximalen lateralen Abstand $A_{max}$ führt.

6. Ein Verfahren nach Anspruch 5, worin der Wert von $A_{max}$ eine Funktion des Krümmungsradius (R) der projizierten Weglinie des Fahrzeuges, der Breite (BW) des Bündels, der Breite (d) eines kleinen Fahrzeuges und des vorbestimmten minimalen Anteils der Bündelbreite ist.

7. Ein Verfahren nach Anspruch 5, worin der Wert von $A_{max}$ im wesentlichen die Hälfte der Breite eines klein bemessenen Fahrzeuges beträgt.

8. Ein Verfahren nach einem der Ansprüche 4 bis 7, welches die Schritte umfaßt, daß der Detektionsbereich ($S_{Grenze}$) des Sensorbündels auf Basis der Gleichung $S_{Grenze} = 2R\sin Y + Delta\ S$ bestimmt wird, wobei R der Krümmungsradius der projizierten Weglinie des Fahrzeuges ist, Y der Lenkungswinkel des Bündels ist und Delta S die Wegbreite ist.

9. Ein Verfahren nach einem vorhergehenden Anspruch, welches die Schritte umfaßt, daß der tatsächliche Winkel, um welchen das Bündel gelenkt wird (Y), gemessen wird, daß der Fehler (e) zwischen dem tatsächlich bewegten Winkel und dem bestimmten Winkel ($Y_{Grenze}$) auf Basis des Ausdrucks $e = Y_{Grenze} - Y$ bestimmt wird und daß die Größe, durch welche der Sensor eingestellt wird, um einen Anteil (G) des Fehlers geändert wird.

10. Ein Verfahren nach einem vorhergehenden Anspruch, welches die Schritte umfaßt, daß die Einstellung des Sensors unterbunden wird, wenn der Winkel, um welchen das Bündel zu bewegen ist, kleiner als ein vorbestimmter Winkel ist.

11. Ein Verfahren nach einem vorhergehenden Anspruch, worin der Schritt der Einstellung des Sensors bei nicht mehr als einer vorbestimmten Maximalrate ausgeführt wird.

12. Vorrichtung zur Einstellung eines Sensors (22) zum Gebrauch bei der Wahrnehmung von Objekten im Weg eines Fahrzeuges (10), um das Bündel (14) des Sensors bezüglich der Bewegungsrichtung des Fahrzeuges zu richten, wobei die Bewegungsrichtung durch eine Lenkungseingabe des Bedieners gesteuert wird und die Vorrichtung umfaßt Wahrnehmungsmittel (32), zur Messung der Größe der Lenkungseingabe des Bedieners, um die projizierte Weglinie des Fahrzeuges zu erhalten; Verarbeitungsmittel (24) zur Bestimmung eines Winkels, um welchen das Sensorbündel (22) als Funktion der gemessenen Lenkungseingabe zu lenken ist; und Einstellungsmittel (26, 28) zur Einstellung des Sensors, um zu veranlassen, daß dessen Bündel um den bestimmten Winkel gelenkt wird;
dadurch gekennzeichnet,
daß das Verarbeitungsmittel wirksam ist, um einen Grenzwinkel ($Y_{Grenze}$) zu bestimmen, bei welchem der Abstand zwischen einer Mittellinie des Sensorbündels und der erhaltenen projizierten Weglinie des Fahrzeuges sich bei einem maximalen lateralen Abstand ($A_{max}$) befindet und um den bestimmten Winkel zu begrenzen, um welchen das Sensorbündel bei dem Grenzwinkel ($Y_{Grenze}$) zu lenken ist.

13. Vorrichtung nach Anspruch 12, worin der maximale laterale Abstand ($A_{max}$) einen Wert aufweist, so daß ein vorbestimmter minimaler Anteil (PCT) der Bündelbreite auf den Weg des Fahrzeuges gerichtet ist.

14. Vorrichtung nach Anspruch 12 oder 13 mit einem Geschwindigkeitssensor (30) zur Messung der Fahrzeuggeschwindigkeit, wobei das Verarbeitungsmittel (24) ausgelegt ist, um den Winkel zu bestimmen, um welchen das Bündel als Funktion der Fahrzeuggeschwindigkeit zu lenken ist.

15. Vorrichtung nach einem der Ansprüche 12 bis 14, worin das Verarbeitungsmittel (24) ausgelegt ist, um den Krümmungsradius (R) der projizierten Weglinie des Fahrzeuges zu bestimmen und um den Winkel zu bestimmen, um welchen das Bündel als Funktion des bestimmten Krümmungsradius (R) zu lenken ist, wenn die Bewegungsrichtung des Fahrzeuges im wesentlichen kreisförmig ist.

16. Vorrichtung nach Anspruch 15, worin das Verarbeitungsmittel (24) ausgelegt ist, um den Grenzwinkel ($Y_{Grenze}$) zu bestimmen, um welchen das Bündel auf Basis des Ausdrucks $Y_{Grenze} = \cos^{-1}((R-A_{max})/R)$ zu bewegen ist, wobei R der Krümmungsradius der projizierten Weglinie des Fahrzeuges ist, $A_{max}$ der maximale laterale Abstand zwischen der projizierten Weglinie und der Mittellinie des Bündels ist und $Y_{Grenze}$ der Wert des Lenkungswinkels des Bündels ist, was zum maximalen lateralen Abstand $A_{max}$ führt.

17. Vorrichtung nach Anspruch 16, worin der Wert von $A_{max}$ eine Funktion des Krümmungsradius (R) der projizierten Weglinie des Fahrzeuges, der Breite (BW) des Bündels, der Breite (d) eines kleinen Fahrzeuges und des vorbestimmten minimalen Anteils der Bündelbreite ist.

18. Vorrichtung nach Anspruch 16, worin der Wert von $A_{max}$ im wesentlichen die halbe Breite eines klein bemessenen Fahrzeuges ist.

19. Vorrichtung nach einem der Ansprüche 15 bis 18, worin das Verarbeitungsmittel (24) ausgelegt ist, um den Detektionsbereich ($S_{Grenze}$) des Sensorbündels auf Basis der Gleichung $S_{Grenze} = 2R\sin Y + \text{Delta } S$ zu bestimmen, wobei R der Krümmungsradius der projizierten Weglinie des Fahrzeuges ist, Y der Lenkungswinkel des Bündels ist und Delta S die Wegbreite ist.

20. Vorrichtung nach einem der Ansprüche 12 bis 19 mit Wahrnehmungsmitteln zur Messung des tatsächlichen Winkels, um welchen das Bündel gelenkt wird (Y), wobei die Verarbeitungsmittel (24) ausgelegt sind, um den Fehler (e) zwischen dem tatsächlich bewegten Winkel und dem bestimmten Winkel ($Y_{Grenze}$) auf Basis des Ausdrucks $e = Y_{Grenze} - Y$ zu bestimmen, und die Einstellungsmittel zu veranlassen, die Größe, durch welche der Sensor eingestellt wird, um einen Anteil (G) des Fehlers zu ändern.

21. Vorrichtung nach einem der Ansprüche 12 bis 20, worin das Verarbeitungsmittel (24) ausgelegt ist, um die Einstellung des Sensors zu unterbinden, wenn der Winkel, um welchen das Bündel zu bewegen ist, kleiner als ein vorbestimmter Winkel ist.

22. Vorrichtung nach einem der Ansprüche 12 bis 21, worin das Verarbeitungsmittel ausgelegt ist, um den Sensor zu veranlassen, mit nicht mehr als einer voreingestellten Maximalrate eingestellt zu werden.

**Revendications**

1. Méthode de réglage d'un capteur (22) destiné à être utilisé dans la détection d'objets situés sur le trajet d'un véhicule (10) de façon à diriger le faisceau (14) du capteur par rapport à la direction de mouvement du véhicule, laquelle direction de mouvement est commandée par le braquage d'un opérateur comme entrée; la méthode comprenant les étapes consistant à mesurer l'amplitude de braquage par l'opérateur comme entrée pour obtenir la ligne de trajet prévu du véhicule; à déterminer un angle par lequel le faisceau doit être braqué en fonction du braquage mesuré comme entrée; et à régler le capteur de façon à faire braquer son faisceau par l'angle déterminé; caractérisée par les étapes consistant à déterminer un angle limite ($Y_{limit}$) auquel la distance entre une ligne médiane du faisceau du capteur et la ligne de trajet prévu du véhicule est une distance latérale maximale ($A_{max}$), et à limiter l'angle déterminé par lequel le faisceau du capteur est à braquer à l'angle limite ($Y_{limit}$).

2. Méthode selon la revendication 1, dans laquelle la distance latérale maximale ($A_{max}$) a une valeur telle qu'une proportion minimale prédéterminée (PCT) de la largeur du faisceau est dirigée sur le trajet du véhicule.

3. Méthode selon la revendication 1 ou 2, comprenant l'étape consistant à mesurer la vitesse du véhicule, et à déterminer l'angle par lequel le faisceau est à braquer en fonction de la vitesse du véhicule.

4. Méthode selon l'une quelconque des revendications précédentes, qui comprend, quand la ligne de trajet prévu du véhicule est sensiblement circulaire, les étapes consistant à déterminer le rayon de courbure (R) de la ligne de trajet prévu du véhicule, et déterminer l'angle par lequel le faisceau est à braquer en fonction du rayon de courbure déterminé (R).

5. Méthode selon la revendication 4, comprenant les étapes consistant à déterminer l'angle limite ($Y_{limit}$) auquel le faisceau est à déplacer sur la base de l'expression $Y_{limit} = \cos^{-1}[(R - A_{max}) / R]$ où R est le rayon de courbure de la ligne de trajet prévu du véhicule, Amax est la distance latérale maximale entre la ligne de trajet prévu et la ligne médiane du faisceau et $Y_{limit}$ est la valeur de l'angle de braquage du faisceau qui résulte en la distance latérale maximale $A_{max}$.

6. Méthode selon la revendication 5, dans laquelle la valeur de $A_{max}$ est fonction du rayon de courbure (R) de la ligne de trajet prévu du véhicule, de la largeur (BW) du faisceau, de la largeur (d) d'un petit véhicule et de la proportion minimale prédéterminée de la largeur du faisceau.

7. Méthode selon la revendication 5 dans laquelle la valeur de $A_{max}$ est sensiblement la moitié de la largeur d'un véhicule de petite taille.

8. Méthode selon l'une quelconque des revendications 4 à 7, comprenant les étapes consistant à déterminer la portée de détection ($S_{limit}$) du faisceau du capteur sur la base de l'équation $S_{limit} = 2 R \sin Y + \Delta S$, où R est le rayon de courbure de la ligne de trajet prévu du véhicule, Y est l'angle de braquage du faisceau et $\Delta S$ est la largeur du trajet.

9. Méthode selon n'importe laquelle des revendications précédentes, comprenant les étapes consistant à mesurer l'angle réel par lequel le faisceau est braqué (Y), à déterminer l'erreur (e) entre l'angle réel après déplacement et l'angle déterminé ($Y_{limit}$) sur la base de l'expression e = $Y_{limit}$ - Y, et à modifier la valeur du réglage du capteur par une proportion (G) de l'erreur.

10. Méthode selon l'une quelconque des revendications précédentes, comprenant les étapes consistant à inhiber le réglage du capteur quand l'angle par lequel le faisceau est à déplacer est inférieur à un angle prédéterminé.

11. Méthode selon l'une quelconque des revendications précédentes, dans laquelle l'étape de réglage du capteur est effectuée à une vitesse ne dépassant pas une vitesse maximale prédéterminée.

12. Dispositif pour le réglage d'un capteur (22) destiné à être utilisé dans la détection d'objets situés sur le trajet d'un véhicule (10) de façon à diriger le faisceau (14) du capteur par rapport à la direction de mouvement du véhicule, laquelle direction de mouvement est commandée par un braquage d'opérateur comme entrée; le dispositif comprenant des moyens de détection (32) pour mesurer la valeur de braquage de l'opérateur pour obtenir la ligne de trajet prévu du véhicule, des moyens de traitement (24) pour déterminer un angle par lequel le faisceau du capteur (22) est à braquer en fonction du braquage entré mesuré; et des moyens de réglage (26, 28) pour régler le capteur de façon à faire braquer le faisceau par l'angle déterminé; caractérisé en ce que les moyens de traitement fonctionnent pour déterminer un angle limite ($Y_{limit}$) auquel la distance entre une ligne médiane du faisceau du capteur et la ligne obtenue de trajet prévu du véhicule est une distance latérale maximale ($A_{max}$) et pour limiter l'angle déterminé par lequel le faisceau du capteur est à braquer à l'angle limite ($Y_{limit}$).

13. Dispositif selon la revendication 12, dans lequel la distance latérale maximale ($A_{max}$) a une valeur telle qu'une proportion minimale prédéterminée (PCT) de la largeur du faisceau est dirigée sur le trajet du véhicule.

14. Dispositif selon la revendication 12 ou 13, comprenant un capteur de vitesse (30) pour mesurer la vitesse du véhicule, les moyens de traitement (24) étant adaptés pour déterminer l'angle par lequel le faisceau est à braquer en fonction de la vitesse du véhicule.

15. Dispositif selon l'une quelconque des revendications 12 à 14, dans lequel les moyens de traitement (24) sont adaptés pour déterminer le rayon de courbure (R) de la ligne de trajet prévu du véhicule et pour déterminer l'angle par lequel le faisceau est à braquer en fonction du rayon de courbure déterminé (R) quand la direction de mouvement du véhicule est essentiellement circulaire.

16. Dispositif selon la revendication 15, dans lequel les moyens de traitement (24) sont adaptés pour déterminer l'angle limite ($Y_{limit}$) par lequel le faisceau est à déplacer sur la base de l'expression $Y_{limit} = \cos^{-1}[(R - A_{max}) / R]$ où R est le rayon de courbure de la ligne de trajet prévu du véhicule, $A_{max}$ est la distance latérale maximale entre la ligne de trajet prévu et la ligne médiane du faisceau et Ylirnit est la valeur de l'angle de braquage du faisceau qui résulte en la distance latérale maximale $A_{max}$.

17. Dispositif selon la revendication 16, dans lequel la valeur de $A_{max}$ est fonction du rayon de courbure (R) de la ligne de trajet prévu du véhicule, de la largeur (BW) du faisceau, de la largeur (d) d'un petit véhicule et de la proportion minimale prédéterminée de la largeur du faisceau.

18. Dispositif selon la revendication 16, dans lequel la valeur de $A_{max}$ est sensiblement la moitié de la largeur d'un véhicule de petite taille.

19. Dispositif selon l'une quelconque des revendications 15 à 18, dans lequel les moyens de traitement (24) sont adaptés pour déterminer la portée de détection ($S_{limit}$) du faisceau du capteur sur la base de l'équation $S_{limit} = 2 R \sin Y + \Delta S$, où R est le rayon de courbure de la ligne de trajet prévu du véhicule, Y est l'angle de braquage du faisceau et $\Delta S$ est la largeur du trajet.

20. Dispositif selon l'une quelconque des revendications 12 à 19, comprenant des moyens de détection pour mesurer l'angle réel de braquage du faisceau (Y), les moyens de traitement (24) étant adaptés pour déterminer l'erreur (e) entre l'angle braqué réel et l'angle déterminé ($Y_{limit}$) sur la base de l'expression e = $Y_{limit}$ - Y, et pour agir sur les moyens de réglage pour qu'ils modifient l'ampleur de réglage du capteur par une proportion (G) de l'erreur.

21. Dispositif selon l'une quelconque des revendications 12 à 20 dans lequel les moyens de traitement (24) sont adaptés pour inhiber le réglage du capteur quand l'angle par lequel le faisceau est à braquer est inférieur à un angle prédéterminé.

22. Dispositif selon l'une quelconque des revendications 12 à 21, dans lequel les moyens de traitement sont adaptés pour faire régler le capteur à une vitesse ne dépassant pas une vitesse maximale prédéterminée.

FIG.1

FIG.2

FIG.3

FIG.4

VEHICLE
SPEED
SENSOR
30

24

STEERING
WHEEL
POSITION
SENSOR
32

CRUISE

COMPUTER

20

RADAR
SYSTEM

22

STEP

DIR.

28

STEPPER
MOTOR
DRIVER

26

STEPPER
MOTOR

34

ANTENNA
POSITION
SENSOR

Y

FIG.5

INTERRUPT
36

READ
INPUTS
38

LOOK UP DESIRED
ANTENNA POSITION
$Y_{Limit}$
40

LOOK UP
FUNCTION DB
42

- $Y_{Limit} = Y_{Limit} * DB$
- LIMIT $Y_{Limit}$
44

$e = Y_{Limit} - Y$
46

OUTPUT MOTOR
COMMAND STEPS
AND DIRECTION
48

EXIT

FIG.6